# EUROPEAN PATENT APPLICATION

(11) **EP 4 745 855 A1**
(43) Date of publication of application: **20.05.2026**
(21) Application number: 24854127.8
(22) Date of filing: 30.07.2024
(51) Int. Cl.: G06Q 10/0633, G06Q 50/04

(54) **TASK MANAGEMENT SYSTEM, TASK MANAGEMENT METHOD, AND PROGRAM**

(30) Priority: 17.08.2023 JP 2023132875
(71) Applicant: Nissho Elektron Co., Ltd., Izumisano-shi, Osaka 598-0021 (JP)
(72) Inventor: SINTO SHOHEI, Izumisano-shi, Osaka 598-0021 (JP)
(74) Representative: Gille Hrabal Partnerschaftsgesellschaft mbB Patentanwälte
(86) International application number: PCT/JP2024/027243
(87) International publication number: WO 2025/037536

(57) **Abstract**

To enhance motivation of a user who repeatedly performs the same work. A task management system includes a reception unit 11 that receives information indicating that one task among a plurality of tasks has been completed, the tasks being included in work performed by each user, and a scenario progressing unit 12 that progresses avatars of a plurality of users according to a scenario assigned to each avatar. The scenario progressing unit 12 sequentially progresses each avatar for a plurality of scenes included in one scenario each time one task is completed. The number of scenes included in one scenario is set to a different number according to the user.

## Description

### Background Art

In the related art, there is a production line progress information display system capable of displaying production efficiency of a production line in an easy-to-understand manner and managing the production line (refer to, for example, Patent Literature 1). The production line progress information display system described in Patent Literature 1 obtains the current number of actual processes based on process completion information and outputs the obtained number to a monitor.

In the production line progress information display system, a progress status can be displayed on a sealing machine monitor installed at each production site. Thereby, in a case where work is behind schedule and there is a worker operating a sealing machine, it is possible to prompt the worker to speed up a pace of work.

### Citation List

### Patent Literature

Patent Literature 1: JP 2012-174019 A

### Summary of Invention

### Technical Problem

Meanwhile, a worker in a production line is required to repeatedly perform the same task, which is often simple work. In this case, there is a problem that motivation of the worker for the work is easily lowered and concentration of the worker is easily interrupted.

In the production line progress information display system as in Patent Literature 1, in a case where work is behind schedule, it is possible to prompt a worker to speed up a pace of the work, but effect of enhancing motivation of the worker is low.

The present invention has been made in view of the above circumstances, and an object of the present invention is to provide a task management system, a task management method, and a program capable of enhancing motivation of a user who repeatedly performs the same work.

### Solution to Problem

A task management system according to an aspect of the present invention includes: a reception unit that receives information indicating that one task among a plurality of tasks has been completed, the tasks being included in work performed by each user; and a scenario progressing unit that progresses avatars of a plurality of users according to a scenario assigned to each avatar, in which the scenario progressing unit sequentially progresses each avatar for a plurality of scenes included in one scenario each time one task is completed, and the number of scenes included in the one scenario is set to a different number according to a user.

A task management method according to another aspect of the present invention includes: a reception step of receiving information indicating that one task among a plurality of tasks has been completed, the tasks being included in work performed by each user; and a scenario progressing step of progressing avatars of a plurality of users according to a scenario assigned to each avatar, in which the scenario progressing step includes a step of sequentially progressing each avatar for a plurality of scenes included in one scenario each time one task is completed, and the number of scenes included in the one scenario is set to a different number according to a user.

A program according to another aspect of the present invention is a program for causing at least one processor to execute each step of the task management method.

### Advantageous Effects of Invention

The task management system, the task management method, and the program according to the present invention have an advantage that motivation of a user who repeatedly performs the same work can be enhanced.

### Brief Description of Drawings

[Fig. 1] Fig. 1 is a block diagram of a system including a task management device (a task management system) according to an embodiment of the present invention.
[Fig. 2] Fig. 2A is a block diagram of an event generation unit according to the embodiment, and Fig. 2B is a block diagram of a calculation unit according to the embodiment.
[Fig. 3] Fig. 3 is a flowchart illustrating an example of an operation of the task management device according to the embodiment.
[Fig. 4] Fig. 4 is a flowchart illustrating an example of an operation of the task management device according to the embodiment.

### Description of Embodiments

### <Embodiment>

Hereinafter, a task management system according to the present embodiment will be described in detail with reference to the accompanying drawings.

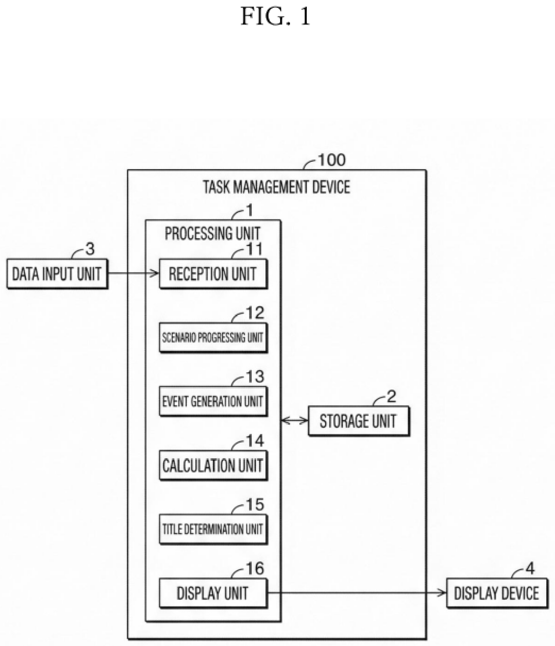

A task management system according to the present embodiment is a system that can enhance motivation of a user to complete a task by progressing a scenario assigned to an avatar of the user when completion of one task in work performed by the user is input. As illustrated in Fig. 1, the task management system according to the present embodiment includes a reception unit 11 that receives completion of one task, and a scenario progressing unit 12 that progresses an avatar of a user according to a scenario.

Here, each scenario includes a plurality of scenes. When one task is completed, the scenario progressing unit 12 can progress one scene. The number of scenes included in one scenario is set to a different number according to the user.

The user can progress the scenario by the avatar for each scene by completing one task, and thus, motivation to complete the task can be enhanced. The number of scenes included in one scenario is set to be different for each user, and thus, difficulty of achieving the scenario can be adjusted by the number of scenes. That is, a difficulty level for achieving the scenario can be adjusted by setting the number of scenes included in one scenario to be smaller than usual for a user who performs work including a task with a high difficulty level, or by setting the number of scenes included in one scenario to be larger than usual for a user with a high skill level.

Thereby, for example, even for a user who only performs work such as work of repeating a simple task, it is possible to enhance motivation, and it is possible to improve concentration on the work. As a result, the user can increase a speed of the work, and can expect improvement in production capacity.

In this specification, a scenario refers to a story plot assigned to each avatar. As described above, the scenario includes a plurality of scenes. Preferably, the plurality of scenes have contents associated with each other, and the story is developed by sequentially progressing the scenes. By sequentially displaying the plurality of scenes, a plot of one story is completed as a scenario. Through all the scenes, one scenario is executed, and after one scenario is achieved, the scenario is executed again from the first scene.

Examples of the scenario include the following. That is, a hotel work scenario can be exemplified as a scenario. The hotel work includes, for example, work for a front desk clerk, a bellboy, a housekeeper, a driver, a restaurant, and the like. In the present embodiment, any one of these roles is assigned to each of the avatars of the plurality of users.

The scenario for a front desk clerk includes (1) a scene where a customer arrives in a lobby and checks in, and (2) a scene where a customer checks out.

The scenario for a bellboy includes (1) a scene where a bellboy carries a customer's car to a parking lot, (2) a scene where a bellboy carries a customer's luggage to a front desk, and (3) a scene where a bellboy carries the customer's luggage to a guest room.

The scenario for a housekeeper includes (1) a scene where a housekeeper cleans a guest room after checkout, and (2) a scene where a housekeeper makes the bed in the guest room.

The scenario for a driver includes (1) a scene where a driver picks up a customer from a station to the hotel, (2) a scene where a driver sends a customer from the hotel to a station, (3) a scene where a driver transports sheets and towels (hereinafter, referred to as linen) to a washing factory, and (4) a scene where a driver transports linen from the washing factory to the hotel.

The scenario for a restaurant includes (1) a scene of cooking, (2) a scene of preparing a table, (3) a scene of serving a dish to a customer who has come to the restaurant, and (4) a scene of cleaning up the table.

Although the scenarios are set for each role, a plurality of users are set as one team, and an entire scenario (hereinafter, sometimes referred to as entire scenario) assigned to one team is also set. In the above example, as the entire scenario, one entire scenario includes a front desk clerk, a bellboy, a housekeeper, a driver, and a restaurant. Other examples of the entire scenario include a pizza shop (scenario: telephone reception, a dough maker, making, delivery, and the like), a hot spring (scenario: reception, a hall staff member, a kitchen chef, and the like), an expedition team living on a deserted island (scenario: a navigator, washing/large tools/fishing, a cook, a hunter, and the like), agriculture (scenario: plowing, sowing/watering, maintenance/fertilizer, harvesting/shipping, and the like), and a restaurant (scenario: reception, a hall staff member, a kitchen chef, and the like). Hereinafter, hotel work will be described as an example of the entire scenario.

In the following embodiment, a task management device 100 in which most of functions of the task management system are integrated in one housing will be described as an example. Here, as the task management system, it is not essential that a plurality of functions are integrated in one housing, and for example, components of the task management system may be provided in a plurality of housings in a distributed manner. In addition, some functions of the task management system may be implemented by a cloud (cloud computing) or the like.

As illustrated in Fig. 1, the entire system including the task management device 100 includes a data input unit 3, a task management device 100, and a display device 4. The data input unit 3, the task management device 100, and the display device 4 are communicably connected in a wired or wireless manner.

Examples of the work performed by the user include one process in a production line for products. In the production line, a plurality of users (workers) respectively perform different pieces of work. In addition, one team can include a plurality of users belonging to one production line.

One piece of work includes a plurality of tasks. For example, in a case where one user is a worker who performs assembling work of one component, that is, in a case where one user performs work of assembling one component, placing the component on a conveyor, and transporting the component to the next user, one task is completed by assembling one component and then placing the component on the conveyor.

Further, as another example, in a case where one user is a worker who performs work of cutting vegetables such as cabbage, that is, in a case where one user performs work of cutting one vegetable, one task is completed when one vegetable is cut.

In the plurality of tasks, one task may be repeatedly performed, or different tasks may be sequentially performed. When one task is completed, the task is input into the task management device 100 by the data input unit 3.

### (Data Input Unit 3)

The data input unit 3 inputs, to the task management device 100, for each task, information indicating that a task has been completed by the user performing work. For example, the data input unit 3 detects a product generated by completing one task, and inputs the number "1" of times of completion to the task management device 100. In this case, examples of the data input unit 3 include a sensor attached to a conveyor that moves a product. Examples of the sensor include a non-contact sensor such as a photoelectric sensor provided so as to cross a conveying direction of the conveyor, a contact sensor such as a pressure-sensitive sensor, a camera, an infrared sensor, and the like.

The data input unit 3 is not limited to inputting the number "1" of times of completion in a case where one product is detected by the sensor. For example, in a case where a plurality of products are generated by one piece of work, the number "1" of times of completion may be input in a case where all of the plurality of products are detected. In addition, for example, in a case of work of "cutting vegetables", the cut vegetables become products, but the number "1" of times of completion may be input in a case where the cut vegetables exceed a predetermined weight.

In addition, the data input unit 3 may determine a degree of completion of the product generated by the work, and may input the number "1" of times of completion in a case where it is determined that the product is complete. Thereby, the number of defective products can be prevented from being input as the number of times of completion. The degree of completion may be automatically determined by the function of the system, or maybe determined by a worker in the next process of the production line.

The data input unit 3 does not have to automatically detect completion of a task by a sensor. The data input unit 3 may be, for example, an input device that allows a worker, a manager, or the like to input completion of a task. Examples of the input device include a mouse, a keyboard, a microphone, and a touch panel. In a case of a task in which no product is generated, an input device is suitably used as the data input unit 3.

In a case where the data input unit 3 receives data indicating that the task is completed, the data is transmitted from the data input unit 3 to the task management device 100.

### (Task Management Device 100)

The task management device 100 can execute processing such as graphic processing based on the information transmitted from the data input unit 3, and display a processing result on the display device 4. The task management device 100 includes, for example, a personal computer or a server computer. That is, the task management device 100 includes a computer system including one or more processors and a memory. At least some of the functions of the task management device 100 are implemented in a case where the processor of the computer system executes a program recorded in the memory of the computer system. The program may be recorded in a memory, may be provided through a telecommunication line such as the Internet, or may be provided by being recorded in a non-transitory recording medium such as a memory card.

As illustrated in Fig. 1, the task management device 100 includes a processing unit 1 that executes processing of the task management device 100 and a storage unit 2. The processing unit 1 is implemented by a processor that executes various types of processing according to a program stored in a storage. Examples of the processor include a central processing unit (CPU), a micro processing unit (MPU), a graphics processing unit (GPU), a microprocessor, and the like.

The storage unit 2 stores information handled by the task management device 100. The storage unit 2 is implemented by, for example, a read only memory (ROM), a random access memory (RAM), an electrically erasable programmable read only memory (EEPROM), or the like.

### (Processing Unit 1)

The processing unit 1 includes a reception unit 11, a scenario progressing unit 12, an event generation unit 13, a calculation unit 14, a title determination unit 15, and a display unit 16. The reception unit 11, the scenario progressing unit 12, the event generation unit 13, the calculation unit 14, the title determination unit 15, and the display unit 16 merely indicate functions implemented by the task management device 100, and do not necessarily indicate substantial configurations.

### (Reception Unit 11)

The reception unit 11 receives the information indicating that one task has been completed, the information being transmitted from the data input unit 3. When receiving the information indicating that one task has been completed from the data input unit 3, the reception unit 11 associates a user name with the information indicating that one task has been completed, and outputs the information to the scenario progressing unit 12. Thereby, it is possible to distinguish a user who inputs the information indicating that one task has been completed. The information received by the reception unit 11 is output to the scenario progressing unit 12.

### (Scenario Progressing Unit 12)

The scenario progressing unit 12 progresses the avatars of the plurality of users for each scene according to the scenario assigned to each avatar. When the information indicating that one task has been completed is input from the reception unit 11, the scenario progressing unit 12 outputs a command to the display unit 16 such that the display unit 16 performs display for causing the corresponding avatar to operate according to one scene.

The scenario progressing unit 12 progresses a first scene and then stores the first scene, and progresses a second scene in a case where information indicating that the next one task has been completed is input. In this manner, the scenario progressing unit 12 sequentially progresses a plurality of scenes. Further, when progress of the last scene is ended, the last scene being included in the plurality of scenes of the scenario assigned to the avatar of the user, in a case where information indicating that the next task has been completed is input, the scenario progressing unit 12 progresses the first scene of the scenario.

The scenario assigned to the avatar is stored in the storage unit 2 in advance. The assignment of the avatar and the scenario is preferably performed by, for example, initial setting. Since the scenario includes a different number of scenes according to the scenario as described above, preferably, the scenario is assigned according to the work of the user, the skill of the user, or the like. Thereby, the difficulty level for achieving the scenario can be adjusted for each user.

### (Event Generation Unit 13)

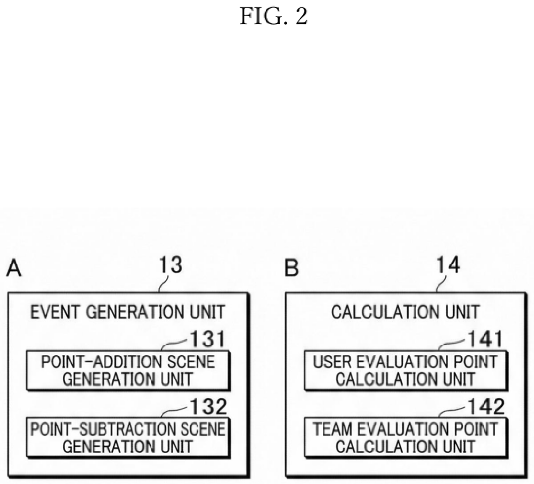

The event generation unit 13 generates a specific event randomly or when a predetermined condition is satisfied. The event generated by the event generation unit 13 may be executed by interrupting the scene being executed by the scenario progressing unit 12, or may be executed after the scene. That is, the event generation unit 13 can execute a specific action regardless of the scene executed by the scenario progressing unit 12. As illustrated in Fig. 2A, the event generation unit 13 according to the present embodiment includes a point-addition scene generation unit 131 and a point-subtraction scene generation unit 132.

The point-addition scene generation unit 131 generates a scene (a point-addition scene) in which a customer gives point-addition evaluation to the avatar while the scenario is in progress. Examples of the scene generated by the point-addition scene generation unit 131 include a scene in which a tip is given from a customer, a scene in which a bonus is given from an owner, and the like. Further, the point-addition scene generation unit 131 may generate a scene in which a score or a plus point is displayed regardless of the content of the scenario. Hereinafter, point-addition evaluation such as a tip, a score, and a point will be collectively referred to as "point for point-addition".

The point for point-addition may be changed randomly for each time the point-addition scene is generated, may be a constant number, or may be linked to the quantity of defective products among the products (for example, the point for point-addition is increased in a case where the number of defective products is small). Further, a condition for generating the point-addition scene is not particularly limited. For example, in a case where a time required for one task is shorter than a certain time, the event may be generated, and in a case where the number of defective products is small, the event may be generated. The event may be generated at a specific ratio (for example, the event occurs once every completion of five tasks), or the event may be generated randomly.

In a case where a scene is generated by the point-addition scene generation unit 131, preferably, the corresponding user gives point-addition evaluation to an evaluation point to be described later.

When information indicating that a defect occurs in a completed task is input, the point-subtraction scene generation unit 132 generates a scene (a point-subtraction scene) in which point-subtraction evaluation is given in the scenario. Examples of the scene generated by the point-subtraction scene generation unit 132 include, in the case of a front desk clerk, a scene where a room is double-booked, a scene where a customer is enraged, and the like. In the case of a bellboy, for example, there is a scene where luggage is delivered to a wrong destination, a scene where a general manager receives a complaint about the bellboy, or the like. In the case of a housekeeper, for example, there is a scene where a large amount of garbage is left in a room, a scene where a customer posts on an SNS that he/she has found an insect in the room, or the like. In the case of a driver, for example, there is a scene of occurrence of a traffic violation or an accident, a scene of payment of a fine, or the like. In the case of a restaurant, for example, there is a scene where a dish is dropped and broken, a scene where a small fire occurs, or the like. Note that the point-subtraction scene generation unit 132 may generate a scene where point-subtraction or a minus point is displayed regardless of the content of the scenario. Hereinafter, point-subtraction evaluation such as a trouble, point subtraction, and a minus point is collectively referred to as "point for point-subtraction".

The term "defect" as used herein means, for example, a defect such as a case where a product generated by completion of a task of a user does not reach a certain quality, or a case where execution of a task is insufficient and an error occurs later. The information indicating that a defect has occurred may be input from the data input unit 3 to the reception unit 11 by the user, or may be input to the reception unit 11 by a line manager.

In a case where a scene is generated by the point-subtraction scene generation unit 132, preferably, the corresponding user gives point-subtraction evaluation to an evaluation point to be described later.

### (Calculation Unit 14)

The calculation unit 14 calculates evaluation points of each user and a team. As illustrated in Fig. 2A, the calculation unit 14 includes a user evaluation point calculation unit 141 that calculates an evaluation point of each user and a team evaluation point calculation unit 142 that calculates an

### evaluation point of a team.

The user evaluation point calculation unit 141 calculates an evaluation point of the user by counting the number of times of completion of the tasks completed by each user. The user evaluation point calculation unit 141 can also calculate the number of times of achievement of the scenario assigned to the avatar of each user from the number of times of completion of the tasks. Preferably, the user evaluation point calculation unit 141 also adds the number of the points for point-addition that are generated by the point-addition scene generation unit 131. On the other hand, as described above, in a case where a scene is generated by the point-subtraction scene generation unit 132, preferably, the point for point-subtraction is subtracted from the evaluation point. Thereby, the evaluation point of each user can be obtained.

The team evaluation point calculation unit 142 can calculate an evaluation point of a team based on the evaluation point of the user belonging to the team. The team evaluation point calculation unit 142 preferably calculates an evaluation point based on the number of times of achievement of the entire scenario and the number of times of achievement of the scenario of each user.

The number of times of achievement of the entire scenario is the number of times that the entire scenario is achieved. Since it is assumed that a reward is obtained from one customer in a case where the entire scenario is achieved, the number of times that the entire scenario is achieved can be evaluated as a reward of a hotel. In achievement of the entire scenario, in a case where each of a front desk clerk, a bellboy, a housekeeper, a driver, and a restaurant achieves the scenario one time, the entire scenario is achieved one time. That is, the number of times of achievement of the entire scenario is the same as the smallest number of times of achievement of the scenario by a user among all users belonging to one team.

Since it is assumed that evaluation for each role leads to evaluation of the team, preferably, the number of times of achievement of the scenario of each user is also added to the team evaluation point.

### (Title Determination Unit 15)

The title determination unit 15 determines a title based on the team evaluation point, and assigns the title to the team. The storage unit 2 stores a determination table used for determination of a title . In the determination table, a required point which is a threshold value of the team evaluation point and a title are associated with each other. The title determination unit 15 determines a title based on the team evaluation point by referring to the determination table. Examples of the title include "first class hotel", "second class hotel", and "third class hotel", but are merely examples, and are not particularly limited.

According to a command from the scenario progressing unit 12, the display unit 16 acquires a graphic in which each avatar progresses the scene, and causes the display device 4 to display the graphic. In addition, the display unit 16 acquires a graphic according to a command from the calculation unit 14, the event generation unit 13, and the title determination unit 15, and causes the display device 4 to display the graphic. The graphic is preferably stored in advance in the storage unit 2.

The avatar is set for each user. Examples of the avatar include a person, an animal, a character resembling a worker, a plant, a machine, and an imaginary character (for example, a dragon, a unicorn, and the like). As the avatar displayed by the display unit 16, a desired avatar of the user may be selected, or all the users may be the same character.

The display unit 16 preferably displays the progress of the scenario by the avatar in real time when the user is executing the task. At this time, when information of one task is input, the avatar progresses one scene. However, in a case where a motion of the avatar is fast, the motion is stopped until a signal of the next task is input. In order to prevent a motion of the avatar from being stopped, it is preferable to set a motion of the avatar to a slow motion. It is preferable that a motion of the avatar can be appropriately adjusted.

The display unit 16 preferably displays the evaluation of the user and the evaluation of the team that are obtained by the calculation unit 14, and the title determined by the title determination unit 15 at the end of the day's work.

In addition, the display unit 16 preferably displays the number of times of achievement of the scenarios without displaying the number of times of completion of the tasks. Thereby, since the number of scenes included in the scenario is not recognized by the user, the actual number of times of completion of the tasks is hardly compared with other users.

### (Display Device 4)

The display screen of the display device 4 is controlled by the display unit 16 of the task management device 100. The display screen of the display device 4 is displayed based on the information output from the display unit 16. The display device 4 may be a large display installed in a place where a plurality of workers can see at all times, or may be a small display installed for each workplace of the worker. In addition, a terminal owned by each worker may be used as the display device 4. Examples of the display device 4 include a monitor, a display, a touch display, a projector, a smartphone, a tablet terminal, a laptop PC, a VR goggle, and a head-mounted display.

### (Flowchart)

Next, an example of an operation of the task management device 100 according to the present embodiment will be described with reference to a flowchart.

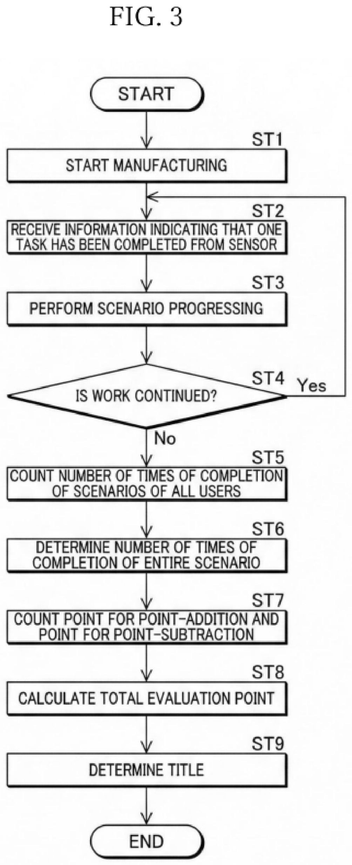

As illustrated in Fig. 3, a task management method using the task management device 100 sequentially executes a reception step (ST1 and ST2), a scenario progress step (ST3 and ST4), and an evaluation step (ST5 to ST9).

In the reception step, after manufacturing is started, information indicating that one task has been completed by the user is received (ST1 and ST2). In a case where the user completes one task, information indicating that one task has been completed is input from the data input unit 3 to the reception unit 11.

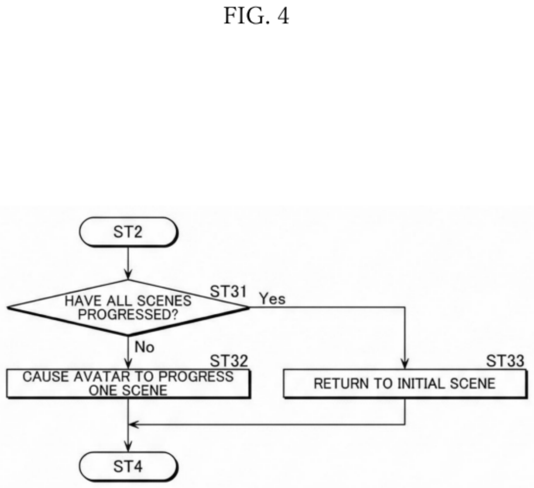

Next, a scenario progressing step is performed. In the scenario progressing step, the avatar of the user progresses one scene based on the information indicating that one task has been completed (ST3). At this time, as illustrated in Fig. 4, in a case where the information indicating that one task has been completed is input to the reception unit 11, the scenario progressing unit 12 determines whether or not all the scenes included in one scenario have progressed (ST31), and in a case where all the scenes are not ended, progresses a scene next to the scene that has ended last time (ST32). In a case where all the scenes have progressed, a first scene of the scenario is progressed (ST33).

Thereafter, as illustrated in Fig. 3, it is confirmed whether or not work of the user is continued (ST4), and in a case where the work is continued, step 2 is executed again.

On the other hand, in a case where the work is ended, an evaluation step is executed. In the evaluation step, the number of times of completion of the tasks of each user is counted, and the number of times of achievement of the scenario of each user is counted (ST5). Next, the number of times of achievement of the entire scenario is calculated from the number of times of achievement of the scenario of each user belonging to the team (ST6).

In addition, a plus evaluation point is given to each user from the point for point-addition that is generated by the point-addition scene generation unit 131, and a minus evaluation point is given to each user from the point for point-subtraction that is generated by the point-subtraction scene generation unit 132. Then, a team evaluation point (total evaluation point) is calculated for the team (ST7 and ST8). Thereafter, a title is determined based on the team evaluation point, and the title is displayed on the display device 4 (ST9).

### <Modification Examples>

The above embodiment is merely one of various embodiments of the present invention. The embodiment can be variously changed according to the design and the like as long as the object of the present invention can be achieved. Hereinafter, modification examples of the embodiment will be described. The modification examples to be described below can be appropriately combined and applied.

In the above embodiment, one scene has been described as, for example, "a scene where a driver picks up a customer from a station to the hotel". However, one scene may be a scene where a driver moves by 100 m from a station to the hotel. Each time one task is completed, a scene where a driver moves by 100 m may be progressed, and after completion of a plurality of tasks, the driver may arrive at the hotel from the station. That is, in a state where "scene where a driver picks up a customer from a station to the hotel" is set as one scenario, scenes where a driver moves by 100 m from a station to the hotel may be set as a plurality of scenes. By setting a plurality of scenes in this manner, it is easy to set the number of scenes included in one scenario.

A plurality of teams can be registered, and the plurality of teams may compete with each other by using team evaluation points. The competition results may be displayed by the team evaluation point and the evaluation point of each user. Thereby, it can be expected that the sense of unity among users in each team is enhanced.

The data input unit 3 may evaluate a quality of the product, acquire an evaluation point from the quality, and then output data related to the evaluation point to the reception unit 11. The data input unit 3 may receive a task completion signal in a case where the evaluation point is equal to or higher than a reference point (for example, 80 points), and the data input unit 3 may not receive a task completion signal in a case where the evaluation point is lower than the reference point. In a case where the evaluation point is 100 points, the data input unit 3 may output a signal to the event generation unit 13, and the point-addition scene generation unit 131 may display the point-addition scene. Examples of the data input unit 3 include a device with a camera, a system with a camera and a control device, and the like. The device with a camera includes a controller. A control unit provided in the controller or the control device performs evaluation on a quality of the product by performing image processing on image data of the product that is obtained by capturing of the camera. The evaluation of the quality may be performed by AI or by image analysis software. Further, the evaluation of the quality may be evaluation by a worker different from the user.

In the above embodiment, in one scenario, when the last scene is ended, the first scene is displayed in the same scenario. However, for example, when the last scene is ended in one scenario, a first scene in another scenario may be displayed. In addition, one scenario may include the number of scenes that cannot be completed in one day's work.

The task management system according to the above embodiment is used for work on the production line as work performed by the user, but the work is not limited to work on a production line. The task management system can be applied to training, rehabilitation, and the like. Examples of the work in the training include training of muscles of an athlete and instructions for muscles of an astronaut and environments. Examples of the work in rehabilitation include instructions of motions of basic operations, training of function recovery, and the like. That is, the "work" in the present specification includes instructions and training.

In the above embodiment, the number of times of achievement of the entire scenario is set as the smallest number of times of achievement of the scenario of the user belonging to a team. In the entire scenario, a scene of a second user may be progressed by using completion of one scene of one user as a trigger. For example, a scene where check-in is performed by a front desk clerk may not proceed unless the scene where a driver picks up a customer from a station to the hotel is completed.

In the above embodiment, the task management device 100 includes, for example, a personal computer or a server computer, and the task management device 100 includes a computer system including one or more processors and a memory. However, the task management device maybe, for example, a smartphone, a mobile phone, a tablet terminal, a game device, or the like.

### <Summary>

As described above, the task management system according to a first aspect includes a reception unit 11 that receives information indicating that one task among a plurality of tasks has been completed, the tasks being included in work performed by each user and a scenario progressing unit 12 that progresses avatars of a plurality of users according to a scenario assigned to each avatar. The scenario progressing unit 12 sequentially progresses each avatar for a plurality of scenes included in one scenario each time one task is completed. The number of scenes included in one scenario is set to a different number according to the user.

According to this aspect, the user can progress the scenario by the avatar for each scene by completing one task, and thus, motivation to complete the task can be enhanced. Further, the number of scenes included in one scenario is set to be different for each user. Thereby, a level of difficulty of the work can be reflected in the number of scenes, and thus, the difficulty of achieving the scenario can be set. As a result, for example, even for a user who only performs work such as work of repeating a simple task, it is possible to enhance motivation, and it is possible to improve concentration on the work. The user can increase a speed of the work, and can expect improvement in production capacity.

In a second aspect, the task management system according to the first aspect further includes a calculation unit 14 that counts the number of times of completion of tasks of each user.

According to this aspect, each user or an administrator of the system can recognize the number of times of completion of tasks for each user.

In a third aspect, in the task management system according to the second aspect, the calculation unit 14 calculates the number of times of achievement of the scenario according to the counted number of times of completion of the tasks. The task management system further includes a display unit 16 that causes a display device 4 to display the number of times of achievement of the scenario that is obtained by the calculation unit 14, instead of displaying the number of times of completion of the tasks.

According to this aspect, since the number of scenes included in the scenario is not recognized by the user, the actual number of times of completion of tasks is hardly compared with other users.

In a fourth aspect, in the task management system according to any one of the first to third aspects, the reception unit 11 is configured to receive information indicating that a defect has occurred in the completed task. The task management system further includes an event generation unit 13 configured to execute a specific action regardless of the scene in progress in a case where the reception unit 11 receives the information indicating that a defect has occurred.

According to this aspect, it is possible to prevent an occurrence of a defect in the task management system.

In a fifth aspect, in the task management system according to any one of the first to fourth aspects, the reception unit 11 is configured to receive information indicating that a defect has occurred in the completed task. The task management system applies minus evaluation to evaluation of the user in a case where the reception unit 11 receives the information indicating that a defect has occurred.

According to this aspect, it is possible to prevent an occurrence of a defect in the task management system.

In a sixth aspect, in the task management system according to any one of the first to fifth aspects, one team includes a plurality of users. The calculation unit 14 calculates the number of times of achievement of the scenario according to the counted number of times of completion of the tasks for each user. The calculation unit 14 sets the number of times of achievement of the scenario by the user who is included in the team and has the smallest number of times of achievement of the scenario, as the number of times of achievement of the entire scenario, which is the number of times of achievement of all of scenarios. The task management system further includes a display unit 16 that displays evaluation of the team from the number of times of achievement of the entire scenario.

According to this aspect, since the teams can compete in evaluation, it can be expected that the sense of unity among users in each team is enhanced, and enhancement of motivation of each user can also be expected.

A task management method according to a seventh aspect includes: a reception step of receiving information indicating that one task among a plurality of tasks has been completed, the tasks being included in work performed by each user; and a scenario progressing step of progressing avatars of a plurality of users according to a scenario assigned to each avatar. The scenario progressing step includes a step of sequentially progressing each avatar for a plurality of scenes included in one scenario each time one task is completed. The number of scenes included in one scenario is set to a different number according to the user.

According to this aspect, for example, even for a user who only performs work such as work of repeating a simple task, it is possible to enhance motivation, and it is possible to improve concentration on the work. The user can increase a speed of the work, and can expect improvement in production capacity.

In an eighth aspect, there is provided a program for causing at least one processor to execute each step of the task management method according to the seventh aspect.

According to the aspect, the task management method can be implemented by executing the program.

### Reference Signs List

- 100: task management device (task management system)
- 1: processing unit
- 11: reception unit
- 12: scenario progressing unit
- 13: event generation unit
- 131: point-addition scene generation unit
- 132: point-subtraction scene generation unit
- 14: calculation unit
- 141: user evaluation point calculation unit
- 142: team evaluation point calculation unit
- 15: title determination unit
- 16: display unit
- 2: storage unit
- 3: data input unit
- 4: display device

## Claims

1. A task management system comprising:
a data input unit that inputs information indicating that a task has been completed by a user performing work;
a reception unit that receives, from the data input unit, the information indicating that one task among a plurality of tasks has been completed, the tasks being included in work performed by each user; and
a scenario progressing unit that progresses avatars of a plurality of users according to a scenario assigned to each avatar, wherein
the scenario progressing unit sequentially progresses each avatar for a plurality of scenes included in one scenario each time one task is completed, and
a number of scenes included in the one scenario is set to a different number according to a user.

2. The task management system according to claim 1, further comprising a calculation unit that counts a number of times of completion of tasks of each user.

3. The task management system according to claim 2, wherein
the calculation unit calculates a number of times of achievement of the scenario according to the counted number of times of completion of the tasks, and
the task management system further includes a display unit that causes a display device to display the number of times of achievement of the scenario that is obtained by the calculation unit, instead of displaying the number of times of completion of the tasks.

4. The task management system according to any one of claims 1 to 3, wherein
the reception unit is configured to receive information indicating that a defect has occurred in the completed task, and
the task management system further includes an event generation unit configured to execute a specific action regardless of the scene in progress in a case where the reception unit receives the information indicating that a defect has occurred.

5. The task management system according to any one of claims 1 to 3, wherein
the reception unit is configured to receive information indicating that a defect has occurred in the completed task, and
the task management system applies minus evaluation to evaluation of the user in a case where the reception unit receives the information indicating that a defect has occurred.

6. The task management system according to claim 2, wherein
in a case where one team includes a plurality of users,
the calculation unit
calculates a number of times of achievement of the scenario according to the counted number of times of completion of the tasks for each user, and
sets the number of times of achievement of the scenario by the user who is included in the team and has the smallest number of times of achievement of the scenario, as a number of times of achievement of an entire scenario, which is a number of times of achievement of all of scenarios, and
the task management system further includes a display unit that displays evaluation of the team from the number of times of achievement of the entire scenario.

7. A task management method executed by a task management system, the method comprising:
a data input step of inputting information indicating that a task has been completed by a user performing work;
a reception step of receiving, from the data input unit, the information indicating that one task among a plurality of tasks has been completed, the tasks being included in work performed by each user; and
a scenario progressing step of progressing avatars of a plurality of users according to a scenario assigned to each avatar, wherein
the scenario progressing step includes a step of sequentially progressing each avatar for a plurality of scenes included in one scenario each time one task is completed, and
a number of scenes included in the one scenario is set to a different number according to a user.

8. A program for causing at least one processor to execute each step of the task management method according to claim 7.
